# EUROPEAN PATENT SPECIFICATION

(11) **EP 3 280 621 B1**
(45) Date of publication and mention of the grant of the patent: **29.01.2020**
(21) Application number: 16712843.8
(22) Date of filing: 24.03.2016
(51) Int. Cl.: B60R 25/20, B60R 25/25, B60R 25/30

(54) **DOOR ACCESS SYSTEM FOR A VEHICLE**
TÜRÖFFNUNGSSYSTEM FÜR EIN FAHRZEUG
DISPOSITIF D'OUVERTURE DE PORTE POUR VÉHICULE

(30) Priority: 10.04.2015 US 201514683837
(43) Date of publication of application: 14.02.2018
(73) Proprietor: Jaguar Land Rover Limited, Coventry, Warwickshire CV3 4LF (GB)
(72) Inventor: JONES, Matt, Coventry Warwickshite CV3 4LF (GB); ROWE, Richard, Coventry Warwickshire CV3 4LF (GB)
(74) Representative: Holmes, Matthew William
(86) International application number: PCT/EP2016/056643
(87) International publication number: WO 2016/162225

(56) References cited:
- EP-A1- 2 500 218
- EP-A2- 1 970 265
- WO-A1-01/73680
- US-A1- 2002 152 010
- US-A1- 2004 021 772
- US-A1- 2010 148 923
- US-A1- 2013 249 669
- US-A1- 2014 204 211

## Description

### TECHNICAL FIELD

The present disclosure relates to a door access system for use in governing access to a vehicle. Aspects of the invention relate to a method of governing access to the vehicle and to the vehicle itself.

### BACKGROUND

Door access systems on vehicles commonly rely on a key fob to electronically activate a door lock on operation by the user of a lock/unlock button. More advanced systems allow the key fob to be identified as a user approaches the vehicle and automatically unlock the vehicle without the need for the user to operate any button on the key fob. Such systems provide a sophisticated feel for the vehicle user and in particular help to meet consumer expectations of higher value vehicles (see also US20130249669A). It is an ongoing challenge of the automotive industry to improve vehicle functionality and design and to further enhance the sophisticated feel of vehicles, without significant additional cost. In particular, vehicle personalisation, where vehicle functions and features can be aligned with specific user requirements, is an increasingly common aim. As far as door entry is concerned, such systems must also be robust against mis-use, for example theft or loss of a key-fob, so that vehicle security is maintained.

The present invention has been devised with a view to addressing these concerns.

### SUMMARY OF THE INVENTION

According to one aspect of the invention there is provided a door access system configured to control access to a vehicle via the vehicle door, the door access system comprising an image capture device configured to capture a first image of a user external to the vehicle and a second moving image of the user external to the vehicle; a comparator module configured to compare the first captured image of the user with a first user identifier and to compare the second captured image with a second user identifier which is a moving image of the user; and a door lock control module configured to control the lock status of the vehicle door if both the first and second captured images, respectively, correspond to the first and second user identifiers. The image capture device is mounted on the side of the vehicle and is configured to remain deactivated when the ignition is started and the engine is running.

The memory configured to store the first and second user identifiers on the vehicle may form a part of the door access system, or may be remote from the system. For example, the identifiers may be stored on a remote server and accessible via wireless communication.

For the purpose of this specification it will be appreciated that reference to comparing a captured image to a user identifier includes only a feature of a facial image being compared with the user identifier (for example, comparison of only the eyes on the image of the user's face) as well as comparing the whole image with a user identifier. Typically, a facial recognition algorithm is used for the purpose of the comparison.

According to another aspect of the invention, there is provided a method of controlling access to a vehicle via a vehicle door. The method comprises capturing a first image of a user external to the vehicle and a second image of the user external to the vehicle using an image capture device, wherein at least the second image is a moving image of the user. The method further comprises comparing the first captured image of the user with a first user identifier and comparing the second captured image with a second user identifier which is a moving image of the user and unlocking the vehicle door if both the first and second captured images, respectively, correspond to the first and second user identifiers. The image capture device is mounted on the side of the vehicle and is configured to remain deactivated when the ignition is started and the engine is running.

### BRIEF DESCRIPTION OF THE DRAWINGS

One or more embodiments of the invention will now be described, by way of example only, with reference to the accompanying drawings, in which:
Figure 1 is a schematic diagram of a vehicle with which a vehicle door access system of the invention may be used;
Figure 2 is an enlarged view of the driver-side window of the vehicle in Figure 1;
Figure 3 is a schematic block diagram of a vehicle door access system of an embodiment of the invention; and
Figure 4 is a schematic block diagram of a vehicle door access system.

### DETAILED DESCRIPTION

The present invention relates to a vehicle door access system for controlling access to a vehicle by unlocking and locking the vehicle doors. The vehicle doors may be controlled independently of one another or may be controlled as a single unit. For purposes of this disclosure, it is to be understood that the control system described herein may comprise a control unit or computational device having one or more electronic processors. The vehicle and/or a system thereof may comprise a single control module or electronic controller or alternatively different functions of the controller(s) may be embodied in, or hosted in, different control modules or controllers. As used herein, the term "control module" will be understood to include both a single control module or controller and a plurality of control modules or controllers collectively operating to provide the required control functionality. A set of instructions could be provided which, when executed, cause said control modules(s) to implement the control techniques described herein (including the method(s) described below). The set of instructions may be embedded in one or more electronic processors, or alternatively, the set of instructions could be provided as software to be executed by one or more electronic processor(s). For example, a first control module may be implemented in software run on one or more electronic processors, and one or more other control modules may also be implemented in software run on or more electronic processors, optionally the same one or more processors as the first control module. It will be appreciated, however, that other arrangements are also useful, and therefore, the present invention is not intended to be limited to any particular arrangement. In any event, the set of instructions described above may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

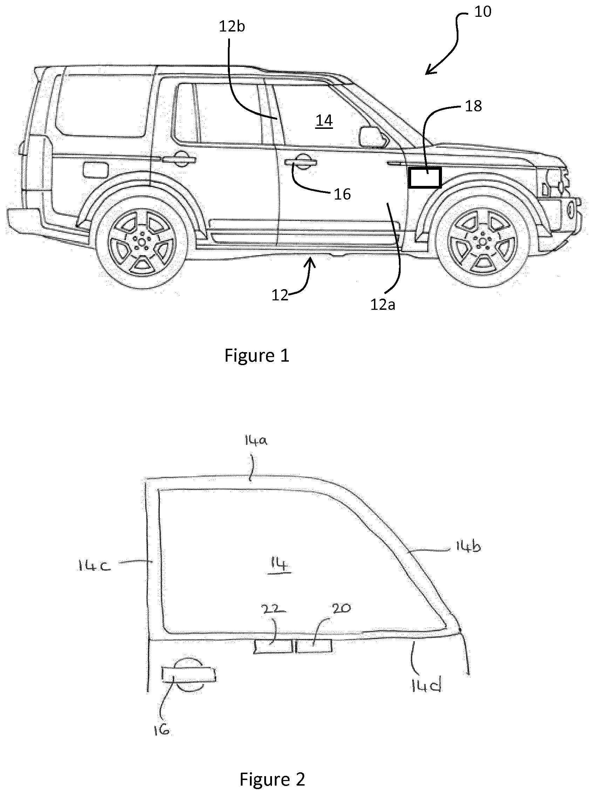

Referring to Figures 1 and 2, the vehicle 10 includes left- and right-side front doors (only the right-side door 12 is shown in Figure 1), also referred to as the driver- and passenger-side doors, respectively, for a right-hand drive vehicle. It will be appreciated that references in this specification to left and right, and driver-side and passenger-side, are interchangeable and are not intended to be limiting.

The driver-side door 12 includes a lower door panel 12a and an upper door frame 12b which defines an opening for receiving a driver-side window 14. The lower door panel 12a comprises an internal panel and an external panel (not visible) which define a gap therebetween. The lower portion of the window 14 is hidden from view in Figures 1 and 2 and is received within the gap. The window is operable to move upwards and downwards within the gap in the door 12 to expose more or less of the window 14 within the opening, depending on the extent to which the user wants the window open. The window is operable by means of an electronically controlled switch (not shown) mounted to the vehicle door 12 which is connected to an actuation unit for the window via an electrical wiring harness.

The window is defined by an upper edge 14a which engages with a roof of the vehicle when the door is closed, a front edge 14b which engages with the A-pillar of the vehicle when the window is closed and a rear edge 14c which engages with the B-pillar of the vehicle when the door is closed. With the window in the fully closed position, the window is elevated out of the gap in the door 12 so that the opening is fully occupied by the window 14. A lower window line 14d of the window 14 is defined immediately adjacent to and above the lower door panel 12a. The upper portion of the door panel 12a protrudes slightly, outwardly from the window line 14d, to define a contoured edge which blends smoothly into the remainder of the door panel 12a beneath.

The door is provided with a door handle 16 located towards the rear of the door panel 12a which is operable between open and closed states when the door is unlocked to allow the user to open and close the door to access the vehicle. A lock assembly for the door handle (not shown) is electronically controlled and is operable by means of a key fob (also not shown) carried by the user. The key fob transmits a wireless signal to the vehicle which is received by an on-board vehicle control system 18. The vehicle control system 18 includes a vehicle door access system (as described further below) which is configured to determine whether the key fob is an authorised key fob for the vehicle and whether the door lock is locked or unlocked.

First (front) and second (rear) image capture devices 20, 22 in the form of , stereoscopic cameras are located along the contoured edge of the lower door panel 12a, immediately below the window line 14d. A stereoscopic camera is a camera which has two or more lenses with a separate image sensor for each lens, so that the camera can simulate human binocular vision and provide a three-dimensional perception of the environment. In a first embodiment, both the front and rear cameras 20, 22 are stereoscopic. The rear camera 22 is located immediately behind the front camera 20, along the longitudinal vehicle axis, and is oriented so as to capture moving images relating to a driver approaching the vehicle from the rear. The front camera 20 is oriented so as to capture moving images relating to a driver approaching the vehicle from the front. The front and rear cameras 20, 22 are also configured to capture still image data from the scene surrounding the vehicle. The image data from the front and rear cameras 20, 22 is transmitted to the vehicle door access system 24 either wirelessly or by hardwiring through the vehicle door 12. It is particularly convenient to mount the cameras 20, 22 in this position because the electrical wiring harness for the electrical windows is already present within the door 12.

In other embodiments, and particularly for use on lower-value vehicles, the cameras may be mono cameras, as opposed to stereoscopic cameras. However, stereoscopic cameras provide the advantage that they can detect the distance between the camera and the approaching user, and the height and physical dimensions of the approaching user, more accurately than a mono camera and so the security level of the system is much greater using a stereoscopic camera. Typically, the resolution of the camera may be at least 640 x 480 pixels at 12 frames per second.

The front camera 20 must not be angled so far outwardly that the field of view does not capture a user towards the front of the vehicle as they approach the door of the vehicle. Likewise, the camera must be angled so that an adequate still image of the user's face can be captured as they stand next to the vehicle in a position in which they would usually wish to open the vehicle door. The rear camera 22 must be positioned and angled so as to collect moving and still image data in a similar fashion.

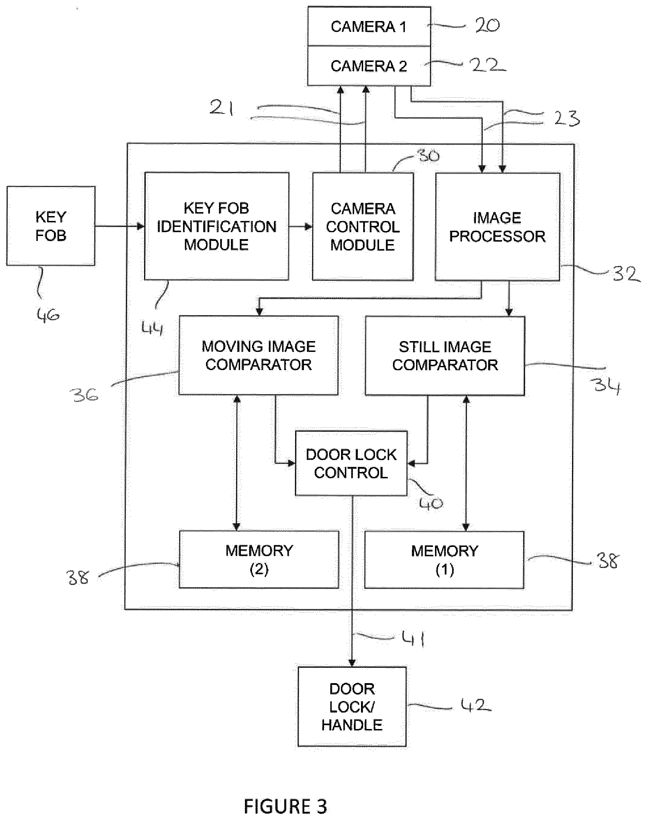

The cameras 20, 22 have a wait state in which they are not recording image data, and a record state in which they are recording image data, the state of the camera being controlled by the vehicle door access system 24. Referring also to Figure 3, the vehicle door access system 24 includes a camera control module 30, which is configured to control the record status of the cameras 20, 22, and an image processor module 32, which is configured to receive raw image data 23 from the cameras 20, 22 and process the data to enhance the captured images by filtering out any spurious signals and background objects in the scene which are not relating to the features of the user that are required for authorisation purposes In addition, if the cameras 20, 22 include a wide angle lens, this can give rise to image distortion, particularly in the region of the user's eyes, and so the image processor 32 may also be configured to remove such distortion effects before the image data is used in the further steps of the process.

The filtered image data from the image processor 32 is forwarded to first and second comparator modules 34, 36. The first comparator module takes the form of a still image comparator module 34 and the second comparator module takes the form of a moving image comparator module 36. The still image comparator module 34 communicates with a memory 38 of the system which stores user identifiers in the form of still and moving images associated with the user. It will be appreciated that although two memories 38 are shown in Figure 3, this functionality may be provided by a single memory or memory device for storing both still image and moving image identifiers.

The still image comparator module 34 compares images captured from the cameras 20, 22 with the stored still image identifier. In a similar fashion, the moving image comparator module 36 compares moving images captured from the cameras 20, 22 with the stored moving image identifier. In the event that there is correspondence between the still image and the stored still image, and between the stored moving image and captured moving image, an authorisation signal 41 is output to a door lock control module 40 to control activation of a door lock 42 to permit user access to the vehicle.

The door access system 24 has two modes of operation: a registration mode in which a user can upload user identifiers in the form of still and moving images to a memory, for use in a subsequent authorisation mode in which user identification is used to control locking or unlocking of the vehicle door lock. Upon first use of the vehicle by an authorised user (for example, at the time of purchase of the vehicle), the user of the vehicle must carry out a registration process which requires them to record in the registration mode a still image of a physical characteristic, such as their face, and a moving image of a physical characteristic, such as a hand gesture or their gait or walking style as the approach the vehicle. Initially, the user stands in the field of view of one of the cameras 20, 22 and generates a still image of their face using the appropriate controls on the camera. The image is processed by the image processor 32 to filter the image and remove any background noise or image clutter from the facial image. The facial image is then transmitted to the memory 38 where it is recorded as an authorised still image identifier for that particular user. The user must then record an authorised moving image of their gait or walking style using the appropriate controls on the camera 20, 22. The moving image is processed by the image processor 32 to remove background noise or image clutter and is transmitted to the memory 38 where it is recorded as an authorised moving image identifier for that particular user
Typically, only one of the cameras 20 or 22 needs to be operable for the purpose of recording the authorised moving and still image identifiers, whilst the other camera need only provide a data recording functionality for the purpose of controlling access to the vehicle. Typically, operation of the camera, for example to switch between the registration mode and the authorisation mode, is controlled through a human-machine interface (HMI) (not shown) located in the vehicle.

In the event that an additional user is authorised to use the vehicle (for example a spouse or a friend), the process is repeated so that each user (or more) has two image identifiers stored in the memory 38, one still image identifier and one moving image identifier. In use in the authorisation mode, providing the user trying to gain access to the vehicle is a match with a corresponding set of image identifiers, the door is unlocked and access to the vehicle is permitted. If the vehicle is sold, the stored images can be removed and new authorised image identifiers stored instead.

The vehicle door access system 24 also includes a key fob identification module 44 which receives the signal transmitted by the key fob 46 for the vehicle and performs a check as to whether the key fob 46 is the authorised key fob for the vehicle. In a known wireless key fob system, the key fob transmits an infrared or radio wave signal which is unique to the particular key fob and is typically registered to the vehicle at the time of purchase. Other systems allow key fob registration to the vehicle once the user has purchased the vehicle. A key fob identification module 44 typically includes a receiver (not shown) which receives the transmitted signal from the key fob (and signals from any other key fobs in the vicinity). The key fob identification module 44 has a memory which stores the signal that is transmitted by the corresponding key fob for the vehicle and which is denoted as the authorised key fob identifier. In existing systems, the key fob identification module 44 compares the key fob identifier with the signals it receives and, if there is a correspondence, initiates an unlock signal to the door as a consequence of the authorised key fob being in the vicinity of the vehicle.

In the present invention the key fob identification module 44 is used in combination with image recognition to provide a more robust and higher security door access system for the vehicle. The key fob identification module 44 is continually in a wait state in which it is ready to receive a signal from the key fob 46 in the vicinity of the vehicle. The key fob identification module 44 communicates with the camera control module 30 so that, if the correct key fob for the vehicle is positively identified, the camera control module 30 sends a signal 21 to the cameras 20, 22 to start recording. By utilising the output from the key fob identification module 44 to determine when the cameras 20, 22 are recording images, the quantity of image data that is recorded and processed is minimised as images are only recorded and processed if there is a positive indication that the user of the vehicle is approaching with the authorised key fob.

As user approaches the vehicle with the key fob 46, walking with their usual gait, one of the cameras 20 or 22 records the image scene to capture the moving image of the user. It will be appreciated that only one of the cameras will actually record the moving image of the user, depending on the direction of approach the user makes to the vehicle. The image data is transmitted to the image processor 32 for processing, as discussed above, and the image data relating to the user's gait is passed to the moving image comparator module 36. The moving comparator module 36 retrieves the pre-recorded moving image identifier for the authorised user from the memory 38 and compares this with the captured moving image using an image recognition comparison algorithm . If there is a correspondence, the moving image comparator module 36 sends a signal 41 to the door lock control module 40 to indicate that the moving image matches the authorised moving image identifier and access to the vehicle is permitted.

Simultaneously or near simultaneously with the procedure for comparing of the moving image with the moving image identifier, the camera (20 or 22) records a still image of the user's face as they approach the vehicle. As before, to avoid an unnecessary volume of data capture, the cameras are only recording when there is a positive indication from the key fob identification module 44 that the key fob 46 for the vehicle is in the vicinity of the vehicle. The still image that is recorded (from either the front camera 20 or the rear camera 22, depending on the direction of approach) is transmitted to the camera control module 30 where it undergoes image processing to remove background clutter from the image scene, as discussed above. The image data is then passed to the still image comparator module 34 which retrieves the still image identifier from the memory 38 for comparison purposes.

The still image comparator module 34 is provided with a facial recognition algorithm which looks for a correspondence between the recorded still image and the stored image identifier. If the facial recognition software determines that there is a correspondence between the recorded still image and the still image identifier, the still image comparator module 34 sends a signal to the door lock control module 40 to indicate that the still image matches the authorised still image identifier. On receipt of a signal to identify a match between both the captured still image and the still image identifier, and between the captured moving image and the moving image identifier, the door lock control module 40 transmits a signal 41 to the door lock 42 to unlock the vehicle door. The user can then manipulate the handle 16 of the vehicle to open the door and gain access to the vehicle. If the user with the key fob 46 is not an authorised user of the vehicle, and there is no facial or moving image match, the door remains in a locked state so that access is denied.

The cameras 20, 22 are only required to record images in certain circumstances when it is necessary to verify the presence of a user trying to gain access to the vehicle. So, for example, if the ignition is started and the engine is running, the camera control module 30 receives an indication of this. There is no need for the cameras 20, 22 to record images at this time and so the cameras 20, 22 remain deactivated. Similarly, if the vehicle is parked and the engine is not running, unless the key fob identification module 44 provides an authorisation signal to the camera control module 30 to indicate that the authorised key fob is in the vicinity of the vehicle, the cameras 20, 22 remain deactivated.

The system may be configured to control the lock status of the door 12 either at the time of entry to the vehicle, where it is necessary for the user to unlock the vehicle door 12 to gain access, or at the time that the vehicle is vacated and the user leaves the vehicle, where it is necessary to lock the vehicle door. In order to lock the door on vacating the vehicle, the sequence of steps described previously may be repeated. For example, the user is required to stand before the cameras 20, 22 so that still and moving images can be captured. These images are then compared with the still and moving image identifiers stored in the memory 38 and, if there is a match, the door is locked so that the user can safely leave the vehicle in a secure state.

In a modification to the process described previously, instead of the image of the user that is captured by the cameras 20, 22 being a moving image of the user approaching the vehicle, the moving image may be a gesture, such as a hand wave, a salute or another hand signal, which the user makes on approach to or arrival at the vehicle. For example, the user may walk towards the vehicle in the usual manner, stop at the vehicle and then wave his or her hand in front of the camera in their usual personalised fashion. In this case the angle of orientation of the camera may be slightly different as it is not necessary to capture data from such a wide-ranging field of view in order to capture the user's approach to the vehicle. Instead, the cameras 20, 22 may be angled so as to capture an image of a user who is standing right next to the vehicle, and in which case only a single camera may be required.

A still more sophisticated embodiment may use discrimination between different gestures to unlock different doors of the vehicle. For example, if the user approaches and raises a single finger as a gesture, this may be linked to the opening of one of the vehicle doors, whereas the user raising two fingers, or a whole hand, may be linked to the opening of two or more vehicle doors. In this case the moving images are captured and compared with two or more stored user identifiers, each of which corresponds to a different door unlock sequence.

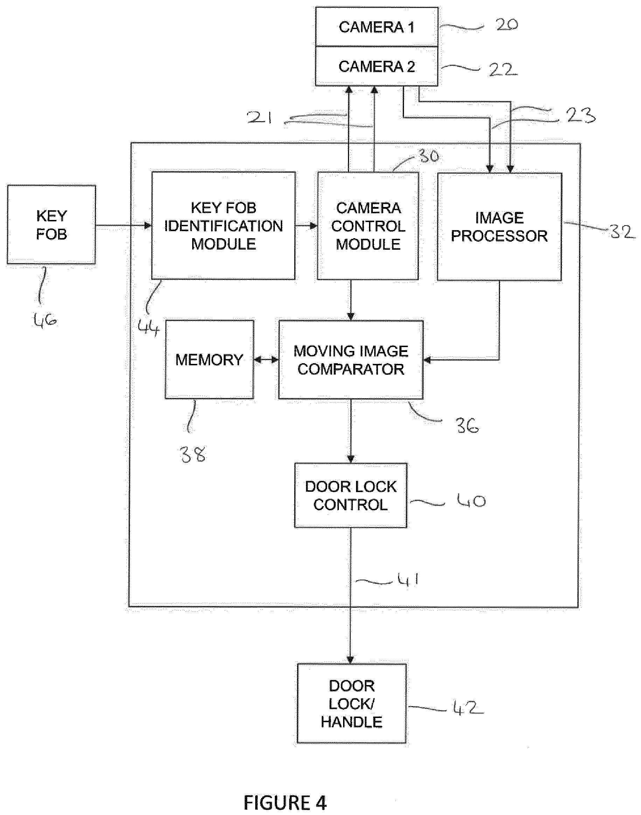

Referring to Figure 4, in a modification to the method described above it is not necessary to require a simultaneous authorisation of both a captured still image and a captured moving image, and either one or the other may be adequate to permit authorised access to the vehicle in combination with a positive identification of the correct key fob. For example, if reduced security is acceptable on a slightly lower value vehicle, a positive identification of the user's key fob 46 in tandem with an authorised moving image of the user may be used to prompt the door lock control module 40 to provide an unlock signal 41 to the door lock 42. Likewise, positive identification of the user's key fob 46 together with only a captured still image which corresponds to the stored still image identifier may be adequate.

In a further modification (not shown) to the embodiment described previously, the door opening mechanism comprising the door lock 42 is configured so that as soon as the door is unlocked, a force is applied to the door 12 to urge the door open. In this case the vehicle need not be provided with a door handle as the user of the vehicle can grab the slightly-open door to gain access once it has been initially unlocked. Handle-less vehicles are known in the art, and have a desirable aesthetic quality due to their streamlined appearance. This embodiment provides a handle-less vehicle in combination with a high-security access system to provide a particularly sophisticated feel to the vehicle.

Front and rear cameras 20, 22 may be fitted on each side of the vehicle so that access to the vehicle may be via either the driver-side door or the passenger-side door. Alternatively, the cameras may be fitted only on the driver-side door with access via the passenger door being permitted only by means of conventional entry, for example by manually operating a button on the key fob 46.

Although the previous description assumes that the various modules of the control system form a part of the vehicle computer system, this need not be the case and some functions may be provided externally to the vehicle, for example on a remote server or on a portable device. By way of example, the function provided by the image processor 32 may be provided by software running on a remote server so that, as the control system receives data from the cameras 20, 22, it communicates wirelessly with the remote server to process the data to extract the necessary images and return these to the door access control system 24 on the vehicle.

It will be appreciated by a person skilled in the art that the invention could be modified to take many alternative forms without depositing from the scope of the appended claims. For example, the image comparator modules may be configured to compare other features and characteristics than those mentioned, such as a nod, a user's front profile or a user's side profile or any other biometric characteristic of the user. In each case the user has the opportunity to store, at the registration phase, an image identifier which corresponds to the gesture or physical characteristic which they wish to use as the authorising characteristic each time they wish to unlock or lock the vehicle.

## Claims

1. A vehicle door access system (24) configured to control access to a vehicle (10) via the vehicle door (12) the vehicle door access system (24) comprising;
an image capture device (20, 22) configured to capture a first image of a user external to the vehicle and a second moving image of the user external to the vehicle (10);
a comparator module (34, 36) configured to compare the first captured image of the user with a first user identifier and to compare the second captured image with a second user identifier which is a moving image of the user; and
a door lock control module (40) configured to control the lock status of the vehicle door (12) if both the first and second captured images, respectively, correspond to the first and second user identifiers, wherein the image capture device (20, 22) is mounted on the side of the vehicle (10) and is configured to remain deactivated when the ignition is started and the engine is running.

2. The vehicle door access system as claimed in claim 1, wherein the second user identifier is a moving image of a gesture performed by the user.

3. The vehicle door access system as claimed in claim 1, wherein the second user identifier is a moving image of a user's gait on approach to the vehicle.

4. The vehicle door access system as claimed in any of claims 1 to 3, wherein the image capture device (20, 22) includes first and second cameras (20, 22) oriented so that the first camera (20) captures the second moving image of the user on approach to the vehicle (10) from the front and the second camera (22) captures the second image of the user on approach to the vehicle (10) from the rear.

5. The vehicle door access system as claimed in any of claims 1 to 4, wherein the first user identifier is a still image of the user's face and the comparator module (34, 36) comprises a facial recognition algorithm configured to compare the still image of the user's face with the first captured image and to determine whether there is a correspondence.

6. The vehicle door access system as claimed in any of claims 1 to 5, comprising a key fob identification module (44) configured to receive a signal from a key fob (46) for the vehicle (10).

7. The vehicle door access system as claimed in claim 6, wherein the key fob identification module (44) is configured to compare the received signal with a stored key fob identifier to determine whether there is a correspondence between them, and to generate an authorisation signal in the event of said correspondence.

8. The vehicle door access system as claimed in claim 7, wherein the image capture device (20, 22) is configured to record images only in the event of the authorisation signal being generated by the key fob identification module (44).

9. The vehicle door access system as claimed in any of claims 1 to 8, comprising a further image capture device configured to capture a further image of the user external to the vehicle, whereby in use the first image capture device is mounted on a driver-side of the vehicle and the second image capture device is mounted on a passenger-side of the vehicle.

10. A vehicle (10) comprising a vehicle door access system (24) as claimed in any of claims 1 to 9.

11. The vehicle as claimed in claim 10, wherein the image capture device (20, 22) is mounted on a driver-side door of the vehicle (10).

12. The vehicle as claimed in claim 11, wherein the image capture device (20, 22) is mounted immediately below the window (14) on the driver-side door (12) of the vehicle (10).

13. The vehicle as claimed in any of claims 10 to 12 when dependent on claim 9, wherein the comparator module (34, 36) is configured to compare the further image with the first and second user identifiers.

14. The vehicle as claimed in any of claims 10 to 13, comprising a memory configured to store the user identifier.

15. A method of controlling access to a vehicle (10) via a vehicle door (12), the method comprising;
capturing a first image of a user external to the vehicle and a second image of the user external to the vehicle using an image capture device (20, 22); wherein at least the second image is a moving image of the user;
comparing the first captured image of the user with a first user identifier and comparing the second captured image with a second user identifier which is a moving image of the user; and
unlocking the vehicle door (12) if both the first and second captured images, respectively, correspond to the first and second user identifiers, wherein the image capture device (20, 22) is mounted on the side of the vehicle (10) and is configured to remain deactivated when the ignition is started and the engine is running.

## Patentansprüche

1. Fahrzeugtürzugangssystem (24), das konfiguriert ist, um den Zugang zu einem Fahrzeug (10) über die Fahrzeugtür (12) zu steuern, wobei das Fahrzeugtürzugangssystem (24) Folgendes umfasst;
eine Bildaufnahmevorrichtung (20, 22), die konfiguriert ist, um ein erstes Bild eines Benutzers außerhalb des Fahrzeugs und ein zweites bewegtes Bild des Benutzers außerhalb des Fahrzeugs (10) aufzunehmen;
ein Komparatormodul (34, 36), das konfiguriert ist, um das erste aufgenommene Bild des Benutzers mit einer ersten Benutzerkennung zu vergleichen und das zweite aufgenommene Bild mit einer zweiten Benutzerkennung zu vergleichen, die ein bewegtes Bild des Benutzers ist; und
ein Türverriegelungssteuermodul (40), das konfiguriert ist, um den Verriegelungszustand der Fahrzeugtür (12) zu steuern, wenn beide, das erste beziehungsweise das zweite aufgenommene Bild der ersten und der zweiten Benutzerkennung entsprechen, wobei die Bildaufnahmevorrichtung (20, 22) an der Seite des Fahrzeugs (10) angebracht ist und konfiguriert ist, um deaktiviert zu bleiben, wenn die Zündung gestartet wird und der Motor läuft.

2. Fahrzeugtürzugangssystem nach Anspruch 1, wobei die zweite Benutzerkennung ein bewegtes Bild einer von dem Benutzer durchgeführten Handlung ist.

3. Fahrzeugtürzugangssystem nach Anspruch 1, wobei die zweite Benutzerkennung ein bewegtes Bild des Ganges eines Benutzers bei Annäherung an das Fahrzeug ist.

4. Fahrzeugtürzugangssystem nach einem der Ansprüche 1 bis 3, wobei die Bildaufnahmevorrichtung (20, 22) eine erste und eine zweite Kamera (20, 22) beinhaltet, die derart ausgerichtet sind, dass die erste Kamera (20) das zweite bewegte Bild des Benutzers bei Annäherung an das Fahrzeug (10) von der Vorderseite aufnimmt und die zweite Kamera (22) das zweite Bild des Benutzers bei Annäherung an das Fahrzeug (10) von der Rückseite aufnimmt.

5. Fahrzeugtürzugangssystem nach einem der Ansprüche 1 bis 4, wobei die erste Benutzerkennung ein Standbild des Gesichts des Benutzers ist und das Komparatormodul (34, 36) einen Gesichtserkennungsalgorithmus umfasst, der konfiguriert ist, um das Standbild des Gesichts des Benutzers mit dem ersten aufgenommenen Bild zu vergleichen und zu bestimmen, ob es eine Übereinstimmung gibt.

6. Fahrzeugtürzugangssystem nach einem der Ansprüche 1 bis 5, umfassend ein Kennmodul (44) des Schlüsselanhängers, das konfiguriert ist, um ein Signal von einem Schlüsselanhänger (46) für das Fahrzeug (10) zu empfangen.

7. Fahrzeugtürzugangssystem nach Anspruch 6, wobei das Kennmodul (44) des Schlüsselanhängers konfiguriert ist, um das empfangene Signal mit einer gespeicherten Schlüsselanhängerkennung zu vergleichen, um zu bestimmen, ob es eine Übereinstimmung zwischen ihnen gibt und um in dem Fall der Übereinstimmung ein Autorisierungssignal zu erzeugen.

8. Fahrzeugtürzugangssystem nach Anspruch 7, wobei die Bildaufnahmevorrichtung (20, 22) konfiguriert ist, um Bilder nur in dem Fall aufzuzeichnen, wenn das Autorisierungssignal durch das Kennmodul (44) des Schlüsselanhängers erzeugt wird.

9. Fahrzeugtürzugangssystem nach einem der Ansprüche 1 bis 8, umfassend eine weitere Bildaufnahmevorrichtung, die konfiguriert ist, um ein weiteres Bild des Benutzers außerhalb des Fahrzeugs aufzunehmen, wodurch bei Verwendung die erste Bildaufnahmevorrichtung auf einer Fahrerseite des Fahrzeugs angebracht ist und die zweite Bildaufnahmevorrichtung auf einer Beifahrerseite des Fahrzeugs angebracht ist.

10. Fahrzeug (10), umfassend ein Fahrzeugtürzugangssystem (24) nach einem der Ansprüche 1 bis 9.

11. Fahrzeug nach Anspruch 10, wobei die Bildaufnahmevorrichtung (20, 22) an einer Fahrerseitentür des Fahrzeugs (10) angebracht ist.

12. Fahrzeug nach Anspruch 11, wobei die Bildaufnahmevorrichtung (20, 22) unmittelbar unter dem Fenster (14) an der Fahrerseitentür (12) des Fahrzeugs (10) angebracht ist.

13. Fahrzeug nach einem der Ansprüche 10 bis 12, wenn abhängig von Anspruch 9, wobei das Komparatormodul (34, 36) konfiguriert ist, um das weitere Bild mit der ersten und der zweiten Benutzerkennung zu vergleichen.

14. Fahrzeug nach einem der Ansprüche 10 bis 13, umfassend einen Speicher, der zum Speichern der Benutzerkennung konfiguriert ist.

15. Verfahren zum Steuern des Zugangs zu einem Fahrzeug (10) über eine Fahrzeugtür (12), wobei das Verfahren Folgendes umfasst;
Erfassen eines ersten Bildes eines Benutzers außerhalb des Fahrzeugs und eines zweiten Bildes des Benutzers außerhalb des Fahrzeugs unter Verwendung einer Bildaufnahmevorrichtung (20, 22);
wobei wenigstens das zweite Bild ein bewegtes Bild des Benutzers ist;
Vergleichen des ersten aufgenommenen Bildes des Benutzers mit einer ersten Benutzerkennung und Vergleichen des zweiten aufgenommenen Bildes mit einer zweiten Benutzerkennung, die ein bewegtes Bild des Benutzers ist; und
Entriegeln der Fahrzeugtür (12), wenn beide, das erste beziehungsweise das zweite aufgenommene Bild, der ersten und zweiten Benutzerkennung entsprechen, wobei die Bildaufnahmevorrichtung (20, 22) an der Seite des Fahrzeugs (10) angebracht und konfiguriert ist, um deaktiviert zu bleiben, wenn die Zündung gestartet wird und der Motor läuft.

## Revendications

1. Système d'accès de porte de véhicule (24) configuré pour commander l'accès à un véhicule (10) via la porte de véhicule (12), le système d'accès de porte de véhicule (24) comprenant ;
un dispositif de capture d'image (20, 22) configuré pour capturer une première image d'un utilisateur externe au véhicule et une seconde image mobile de l'utilisateur externe au véhicule (10) ;
un module comparateur (34, 36) configuré pour comparer la première image capturée de l'utilisateur avec un premier identificateur d'utilisateur et pour comparer la deuxième image capturée avec un deuxième identificateur d'utilisateur qui est une image mobile de l'utilisateur ; et
un module de commande de verrouillage de porte (40) configuré pour commander l'état de verrouillage de la porte du véhicule (12) si les première et seconde images capturées correspondent respectivement aux première et seconde identifications d'utilisateur, dans lequel le dispositif de capture d'image (20, 22) est monté sur le côté du véhicule (10) et est configuré pour rester désactivé lorsque le contact est lancé et le moteur tourne.

2. Système d'accès à la porte du véhicule selon la revendication 1, dans lequel le deuxième identificateur d'utilisateur est une image en mouvement d'un geste accompli par l'utilisateur.

3. Système d'accès à la porte d'un véhicule selon la revendication 1, dans lequel le deuxième identificateur d'utilisateur est une image en mouvement de la démarche d'un utilisateur à l'approche du véhicule.

4. Système d'accès à la porte du véhicule selon l'une quelconque des revendications 1 à 3, dans lequel le dispositif de capture d'image (20, 22) comprend des première et seconde caméras (20, 22) orientées de telle sorte que la première caméra (20) capture la seconde image mobile de l'utilisateur en approche du véhicule (10) par l'avant et la seconde caméra (22) capture la seconde image de l'utilisateur en approche du véhicule (10) par l'arrière.

5. Système d'accès à la porte d'un véhicule tel que revendiqué dans l'une quelconque des revendications 1 à 4, dans lequel le premier identificateur d'utilisateur est une image fixe du visage de l'utilisateur et le module comparateur (34, 36) comprend un algorithme de reconnaissance faciale configuré pour comparer l'image fixe du visage de l'utilisateur avec la première image saisie et pour déterminer si une correspondance existe.

6. Système d'accès à la porte d'un véhicule selon l'une quelconque des revendications 1 à 5, comprenant un module d'identification à porte-clés (44) configuré pour recevoir un signal d'un porte-clés (46) pour le véhicule (10).

7. Système d'accès à une porte de véhicule selon la revendication 6, dans lequel le module d'identification de porte-clés (44) est configuré pour comparer le signal reçu avec un identificateur de porte-clés mémorisé pour déterminer s'il existe une correspondance entre eux et pour générer un signal d'autorisation dans le cas de cette correspondance.

8. Système d'accès à la porte du véhicule selon la revendication 7, dans lequel le dispositif de saisie d'image (20, 22) est configuré pour enregistrer des images uniquement dans le cas où le signal d'autorisation est généré par le module d'identification porte-clés (44).

9. Système d'accès à la porte d'un véhicule selon l'une quelconque des revendications 1 à 8, comprenant un autre dispositif de capture d'image configuré pour capturer une autre image de l'utilisateur à l'extérieur du véhicule, le premier dispositif de capture d'image étant monté en utilisation sur un côté conducteur du véhicule et le second dispositif de capture d'image étant monté sur un côté passager du véhicule.

10. Véhicule (10) comprenant un système d'accès à une porte de véhicule (24) selon l'une quelconque des revendications 1 à 9.

11. Véhicule selon la revendication 10, dans lequel le dispositif de saisie d'image (20, 22) est monté sur une porte côté conducteur du véhicule (10).

12. Véhicule selon la revendication 11, dans lequel le dispositif de saisie d'image (20, 22) est monté immédiatement en dessous de la fenêtre (14) sur la porte côté conducteur (12) du véhicule (10).

13. Véhicule selon l'une quelconque des revendications 10 à 12 en fonction de la revendication 9, dans lequel le module comparateur (34, 36) est configuré pour comparer l'autre image avec les premier et second identificateurs d'utilisateur.

14. Le véhicule tel que revendiqué dans l'une quelconque des revendications 10 à 13, comprenant une mémoire configurée pour stocker l'identifiant de l'utilisateur.

15. Procédé de commande d'accès à un véhicule (10) via une porte de véhicule (12), le procédé comprenant ;
la capture d'une première image d'un utilisateur externe au véhicule et d'une seconde image de l'utilisateur externe au véhicule à l'aide d'un dispositif de capture d'image (20, 22) ; dans lequel au moins la seconde image est une image mobile de l'utilisateur ;
comparer la première image capturée de l'utilisateur avec un premier identificateur d'utilisateur et comparer la deuxième image capturée avec un deuxième identificateur d'utilisateur qui est une image mobile de l'utilisateur ; et
déverrouiller la porte du véhicule (12) si les première et seconde images capturées correspondent respectivement aux première et seconde identifications d'utilisateur, dans lequel le dispositif de capture d'image (20, 22) est monté sur le côté du véhicule (10) et est configuré pour rester désactivé lorsque le contact est mis et le moteur tourne.
